# EUROPEAN PATENT APPLICATION

(11) **EP 4 575 608 A1**
(43) Date of publication of application: **25.06.2025**
(21) Application number: 23275178.4
(22) Date of filing: 21.12.2023
(51) Int. Cl.: G02B 27/01, G02B 5/04

(54) **OPTICAL TRAIN FOR HEAD MOUNTED DISPLAYS**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

An optical train for a head mounted display comprises a display source, a prismatic relay optic, a mirror and a combiner. The prismatic relay optic is arranged to receive light emitted by the display source and form a focal plane proximate to the mirror. The prismatic relay optic comprises two prisms. Light emitted from the display source enters the first prism via a first surface, is reflected off second and third surfaces before passing through the second surface into the second prism through a fourth surface. Light entering the second prism through the fourth surface is reflected off fifth and fourth surfaces before exiting the second prism through a sixth surface. The mirror is arranged to reflect light output from the prismatic relay optic towards the combiner that is arranged to reflect the light incident upon it toward a wearer of the head mounted display.

## Description

### FIELD

The present invention relates to an optical system integrated into a head mounted display.

### BACKGROUND

Head mounted displays are known as a means for displaying an augmented reality to a user. An augmented reality includes a real-world image overlayed with a virtual image when presented to a user. Optical trains are incorporated into head mounted displays to direct light from a light source to a user's eye.

### SUMMARY

According to an aspect of the present invention, there is provided an optical train for a head mounted display that comprises a display source, a prismatic relay optic, a mirror and a combiner. The prismatic relay optic is arranged to receive light emitted by the display source and form a focal plane proximate to the mirror. The prismatic relay optic comprises two prisms. Light emitted from the display source enters the first prism via a first surface, is reflected off second and third surfaces before passing through the second surface into the second prism through a fourth surface. Light entering the second prism through the fourth surface is reflected off fifth and fourth surfaces before exiting the second prism through a sixth surface. The mirror is arranged to reflect light output from the prismatic relay optic towards the combiner that is arranged to reflect the light incident upon it toward a wearer of the head mounted display.

A second aspect provides an optical train integrated into a head mounted display, the optical train comprising a display source, a prismatic relay optic, a mirror and a combiner, wherein: the prismatic relay optic is arranged to receive light emitted by the display source and form a focal plane proximate to the mirror; the prismatic relay optic comprises a first prism and a second prism wherein light emitted from the display source enters the first prism via a first surface, is reflected off a second surface and a third surface before passing through the second surface into the second prism through a fourth surface, and light entering the second prism through the fourth surface is reflected off a fifth surface and the fourth surface before exiting the second prism through a sixth surface; the mirror is arranged to reflect light output from the prismatic relay optic towards the combiner; and the combiner is arranged to reflect the light incident upon it from the mirror toward a wearer of the head mounted display to allow the wearer to view the output from the display source and a real world environment simultaneously.

The prismatic relay optic may further comprise an aperture positioned between the first prism and the second prism, and wherein a size and shape of the aperture correlates to a size and shape of an exit pupil of the optical train.

The aperture may be inserted between the second surface and the fourth surface.

The aperture may be screen printed onto an external side of the second surface of the first prism or onto an external side of the fourth surface of the second prism.

The aperture may be moulded into an internal side of the second surface of the first prism or into an internal side of the fourth surface of the second prism.

The prismatic relay optic may further comprise an air gap between the second surface and the fourth surface.

A thickness of the air gap may be less than 1 mm.

The two prisms of the prismatic relay optic may be integrally formed.

The two prisms of the prismatic relay optic may comprise coupling elements for connecting the prisms together.

The prismatic relay optic may be arranged off-axis with respect to the chief optical ray of a light path through the optical train.

The first prism and the second prism may be rotated with respect to another at the interface between the second surface and the fourth surface.

The optical train may further comprise: a first light sensor configured to collect measurement data by detecting light transmitted through the third surface; and/or a second light sensor configured to collect measurement data by detecting light transmitted through the fifth surface.

The optical train may further comprise: a third light sensor configured to collect measurement data by detecting light transmitted through the mirror.

The optical train may comprise one or more of the first, second and third light sensors.

The first, second and third light sensors may be configured to transmit measurement data to a monitoring module.

A third aspect provides a head mounted display comprising the optical train described above.

The head mounted display may further comprise the monitoring module and wherein the monitoring module is configured to detect a position of an image output by the display source relative to the optical train.

The monitoring module may be configured to detect any offset between a target image position relative to the optical train and the detected position of the image output by the display source relative to the optical train.

The monitoring module may be further configured to adjust an image output by the display source in response to the detected offset.

The monitoring module may be further configured to disable to optical train in response to the offset exceeding a predefined threshold or satisfying predefined conditions.

### BRIEF DESCRIPTION OF THE FIGURES

Embodiments of the invention will now be described by way of example only with reference to the figures, in which:
Figure 1 shows a simplified diagram of an optical train;
Figure 2 shows a simplified diagram of an improved optical train;
Figure 3 shows a first example prismatic relay optic from the improved optical train shown in Figure 2;
Figure 4A shows an aperture inserted in between the two prisms of an example prismatic relay optic;
Figure 4B shows the aperture used in the arrangement of Figure 4A;
Figures 4C and 4D show an aperture screen printed onto a surface of an example prismatic relay optic;
Figures 4E and 4F show an aperture screen moulded into a surface of an example prismatic relay optic;
Figure 5 shows light sensors positioned adjacent to an example prismatic relay optic; and
Figure 6 is a flow diagram showing operation of the improved optical train shown in Figure 2.

### DETAILED DESCRIPTION

There are many applications for head mounted displays (HMDs) that require the wearer to wear the HMD for long periods of time and/or to wear them inside aircraft or vehicles. This can be problematic if the HMD is heavy and/or bulky.

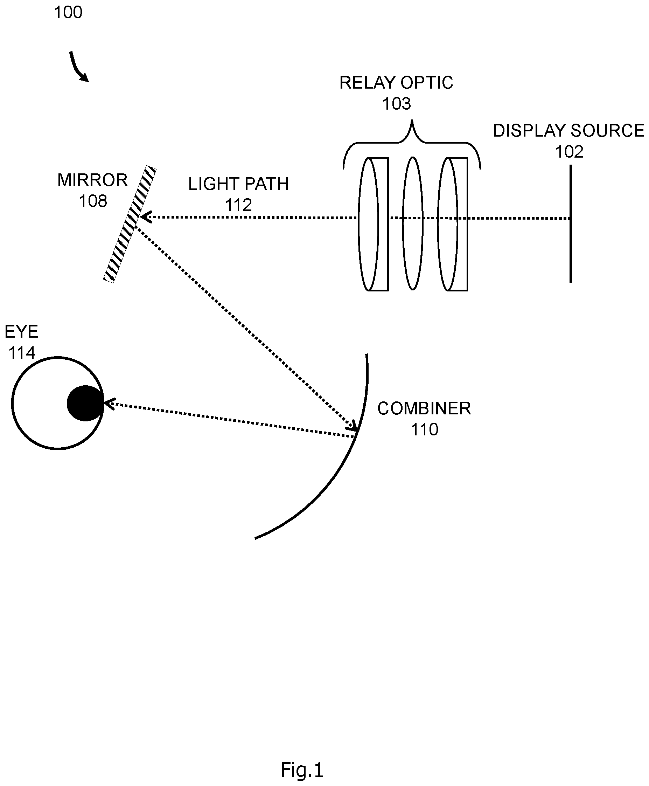

Optical trains within an HMD typically include a light source followed by a series of optical elements with a final optical element configured to direct light towards the eye(s) of the wearer. Optical elements may include mirrors, for redirecting the path of the light, and relay lenses, for modifying properties of the light to transmit image bearing light for presentation to a user. Figure 1 shows an example optical train 100 which can be incorporated into an HMD. Figure 1 shows light originating from a display source 102 and passing through a relay optic element 103 (which comprises a series of lenses) and being reflected by a mirror 108. The final optical element shown in Figure 1 is a combiner 110 which redirects the light towards the eye(s) 114 of the user of the HMD.

As noted above, there are significant design constraints when incorporating an optical train into an HMD. Firstly, the optical train needs to be compact and light enough such that the size and weight of the HMD can be minimized. A bulky and heavy HMD can be impractical for a user to wear if, for example, they are performing tasks that require unrestricted movement whilst wearing the HMD.

Secondly, optical elements introduced into specific HMDs typically need to be bespoke to fit the specifications of the HMD which can result in high manufacturing complexity, assembly time and cost. Therefore, any way in which manufacture of optical elements can be simplified is highly beneficial.

Thirdly, some optical trains can include a high number of optical elements due to the large amount of optical processing required by the final desired image or because of the high number of direction changes the light path takes. This can make it difficult to identify the source of errors in the final image or which optical elements require calibration/replacement. Therefore, optical elements that also enable analysis of the light at intermediate points during the light path is highly beneficial during manufacturing, testing and maintenance of an HMD.

Described herein is a head mounted display (HMD) for providing a real world image and a virtual image that are overlaid when presented to a user. Specifically, an improved optical train for use in an HMD is described which addresses some or all of the aforementioned challenges by replacing typical relay optics with a pair of prisms that also incorporate an aperture as described herein. Use of the pair of prisms reduces the overall form factor of the layout, may reduce the overall number of components and may result in a lighter, more compact optical train. The improved optical train enables an improved fit around the wearer's head because of the ability to fold the optical train without adding an additional optical element.

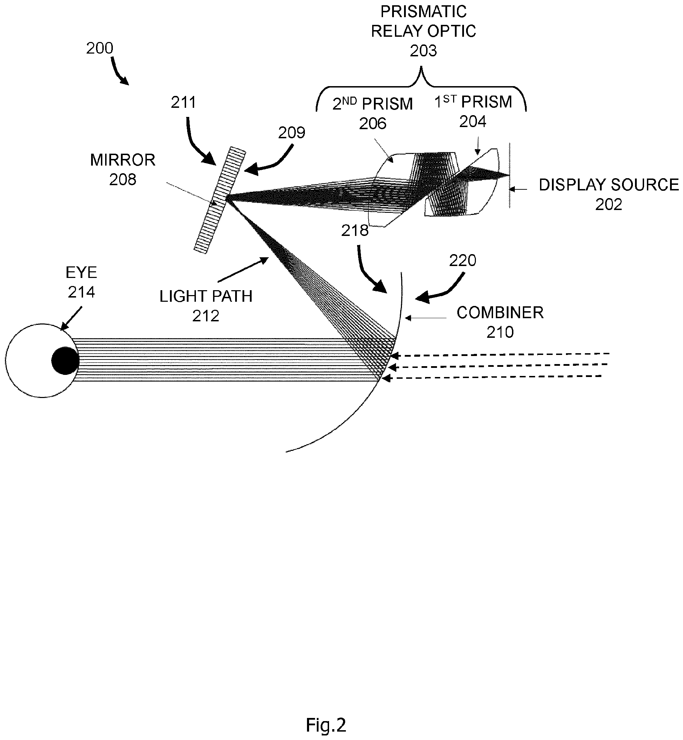

Figure 2 shows an improved optical train 200 which may be integrated into an HMD. Compared to the optical train shown in Figure 1, the optical train 200 of Figure 2 replacing the relay optic element 103 (which comprises a plurality of lenses) with a prismatic relay optic 203 comprising a first prism 204 and a second prism 206. It will be appreciated that a head worn display may comprise two independent optical trains, each one as shown in figure 2, with one optical train for each eye and with the two optical trains being complementary mirror-image arrangements such that a binocular display can be created.

The optical train 200 comprises a display source 202, the prismatic relay optic 203, a mirror 208 and a combiner 210. Figure 2 also shows the light path 212 through the optical train to the position of the wearer's eye 214.

The display source 202 comprises one or more displays, each display comprising a plurality of self-emissive pixels (e.g. mLEDs, OLEDs, etc.). As described above, where the display source 202 comprises a plurality of displays, this may comprise three displays, one for each of the colours red, green and blue. The use of multiple displays (rather than a single display) may enable provision of a high luminance, full colour display.

The prismatic relay optic 203 is positioned on the optical path between the display source 202 and the mirror 208. The prismatic relay optic 203 directs the light output by the display source 202 towards the mirror 208 and has a focal plane that is near or close to the front face 209 of the intermediate mirror 208. The structure of the prismatic relay optic 203 is described in detail below.

The mirror 208 is positioned between the prismatic relay optic 203 and the combiner 210 such that its front face 209 is at or close to a focussed image plane, as described above. This image plane may be referred to as an intermediate image plane since it lies between the display source 202 and the wearer's eye 214. The front face 209 of the mirror 208 is the face of the mirror on which the light output from the prismatic relay optic 203 is incident. The mirror 208 serves to fold the optical path between the display source 202 and the combiner 210 in order that it is more compact. In addition, the front face 209 of the mirror 208 may not be flat, but may instead be convex or concave in shape such that it has optical power (i.e. it has a focussing effect on the light incident upon its front face). Where the mirror 208 has optical power it therefore assists in forming the image viewed by the wearer. The front face 209 of the intermediate mirror 408 may also be decentred and tilted relative to the optical axis of the system. Different combinations of power, tilt and decentring are used depending upon the required layout and/or configuration of the device. Arranging the mirror 208 to be tilted can also help to compensate aberrations induced by the tilted combiner 210.

Either the front surface 209 or rear surface 211 of the mirror 208 is reflective. In a first case the mirror 208 comprises a reflective front surface 209 where the light undergoes a surface reflection from the reflective front surface 209. In a different case the mirror 208 includes a transmissive front surface 209 and reflective rear surface 211, wherein light passes through the mirror and undergoes a surface reflection from the rear surface 211 and passes back via the front surface 209, in this case the element acts like a traditional lens with reflective rear (or back) surface 211, adding additional degrees of freedom to the design.

As the mirror 208 is located near to an intermediate image plane of the optical design, its size and shape assist in defining or limiting the field of view of the image presented to the user. The mirror 208 receives and directs the light toward the combiner 210. When light is not reflected by the mirror it does not continue to make it toward the combiner 100 and the eye 214 of the wearer, and instead may be absorbed by the surrounding chassis or support, thereby ameliorating the control of stray light. Consequently, the mirror 208 also shapes and/or limits the visible field of view presented to a user, by acting as an optical aperture.

The combiner 210 receives light reflected by the mirror 208 and redirects light towards the wearer's eye 214. The combiner may comprise a non-spherical surface form, tilted about at least a first axis (e.g. the X axis) and may also be decentred in the perpendicular axis (e.g. the Y axis), i.e. the central ray in the field of view does not strike the centre of the optical surface form. The combiner 210 is arranged to redirect one or more wavelengths toward the user to allow the user to view a virtual display created by the optical device simultaneously with the outside world (e.g. light rays that pass through the combiner 210 indicated by the dotted arrows in figure 2). The combiner 210 is arranged to redirect light incident upon it by use of an optical coating applied over at least a portion of the surface of the combiner 210. The coating is ideally applied over the whole surface, alternatively only the "optically active" region of the combiners could be coated e.g. only where the rays incident from the mirror 208 are likely to hit the combiner 210 and not elsewhere on the surface where rays incident from the mirror 208 are unlikely to hit. The non-spherical shape is used to compress the size of the overall system and help balance for system aberrations. Because the combiner is tilted it induces optical aberrations into the image light.

Aberrations are caused specifically because the combiner 210 is off-axis to the linear path of light, these aberrations can include spherical, coma, astigmatism and distortion. The combiner 210 is tilted to redirect the light correctly and if it was not correctly tilted the light would not be sent towards the eye. Using just a spherical surface form limits the degrees of freedom of optical correction in the design, allowing the combiner 210 to have a more complicated surface form, e.g. the biconic surface, thus allows additional degrees of freedom to better balance the system aberrations including those caused by the fact the combiner is tilted.

The use of a biconic surface form has a number of benefits. A different radius in both the X and Y axis allows for different optical power in both axes, and also the introduction of a conic contribution in both the X and Y axes. The conic contribution changes the spherical form into alternate surface form shapes dependent upon the value of the conic contribution, such as elliptical, hyperbolic or parabolic which are more eccentric in terms of shape and help to compress the ray bundle of the reflected light into a smaller bundle as compared to a typical spherical surface form, therefore compressing the size of the optical system.

The combiner 210 includes a first optical surface form on its inner surface 218 and a different second optical surface form on its outer surface 220, to minimize deviations to the outside world view. The surface form on the outer surface 220 is described by a different set of optical parameters to the inner surface 218. The outer surface 220 is generally not co-axial to the inner surface 218 and the thickness between the two surfaces varies across the area of the combiner 210. The surface forms are generally described by a different radius and conic constant in the X and Y axis such that they both are biconic with differing optical prescriptions. In some cases the surface forms could have additional complexity, as described by a multiple order polynomial function or through the inclusion of aspheric form contributions.

In addition to an optical coating, the combiner 210 is generally arranged to redirect the light through the use of one of the following optical elements applied over an area of the combiner: a holographic optical element, a diffractive optical element, or an optical microstructure (none of which are shown in figure 2). The use of these optical technologies can provide additional degrees of freedom to the system to redirect or orientate the ray bundle of light in a manner which could not be achieved through the use of a reflective coating alone. As an example a holographic or diffractive optical element could redirect the light at more extreme angles, in accordance with the laws of diffraction, without having to induce a further tilt to the combiner element, as would be needed if only a reflective optical coating is used wherein the design is limited by the laws of reflection.

In some cases the combiner 210 is made of a plastics material and as mentioned above includes coatings having various function. The result is a efficient and highly transmissive component which is very well suited for use in the augmented reality optical design. In most cases the combiner 210 has a transmissivity suitable to view an augmented reality view of symbology and the outside world. If the optical device is to be used in a virtual environment the transmissivity of the combiner can be reduced to close to zero.

It will be appreciated that a head worn display comprises a mechanical chassis (not shown in figure 2) which supports the elements shown in figure 2 and holds them in alignment with each other. For a binocular head worn display, the chassis supports two independent optical trains as shown in figure 2, one for each eye of the wearer, with one optical train being the complementary mirror image of the other.

As described above, a first purpose of the prismatic relay optic 203 is to form a focal plane proximate to the mirror 208. However, the two prismatic elements (first prism 204 and second prism 206) of the prismatic relay optic 203 are aligned in at least one axis to perform the additional purpose of folding and shortening the optical path. In some embodiments, the cross section of the first 204 and second 206 prisms is substantially triangular to facilitate folding and shortening of the light path. The use of the two prisms the configuration shown in Figure 2 means the number of components of the optical train can be minimised due to optical folding taking place within each prism. Minimising the number of components allows the optical train to be more compact thus reducing the size and weight of the HMD into which the optical train is integrated. In the example shown in figure 2, the prismatic relay optic 203 is arranged off-axis with respect to the chief optical ray of the light path such that it can compensate for off-axis aberrations that may be introduced by the mirror element 208 or the combiner element 210. Alternatively, the prismatic relay optic 203 may not be off-axis with respect to the chief optical ray of the light path. The prismatic relay optic 203 may be formed from plastic (e.g. either as two parts or a single integral part, as described below, using a moulding process) and this results in an optical element that is significantly lighter than a relay optic element formed from glass lenses.

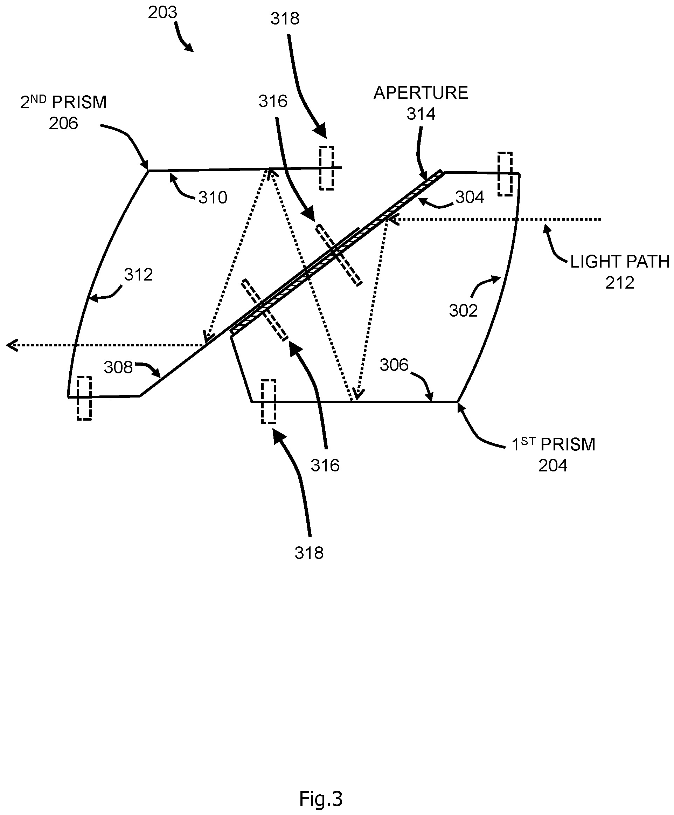

Figure 3 shows a detailed schematic of the prismatic relay optic 203. The first and second prisms 204, 206 both comprise three surfaces which are shaped to have optical power: the first, second and third surfaces 302, 304, 306 which are surfaces of the first prism 204, and fourth, fifth and sixth surfaces 308, 310, 312 which are surfaces of the second prism 206. For example, the surfaces of the first and second prisms may have a surface form defined by at least one of: a spherical surface definition, an aspheric surface definition, a biconical surface definition, or a high order polynomial definition. The first and second prisms may have substantially triangular cross-sections including the three optically powered surfaces.

The light 212 (as emitted by the display source 202) enters the first prism 204 through the first surface 302 and is incident upon the second surface 304 of the first prism 204. The second surface 304 is arranged to reflect light received from the first surface 302 by total internal reflection towards the third surface 306 of the first prism (e.g. as a consequence of its angle). The third surface 306 is arranged to reflect light received from the second surface 304 back to the second surface 304. Due to the angle of incidence, the light reflected from the third surface 306 and incident upon the second surface 204 is not further reflected but is output through the second surface 304 towards the second prism 206 (e.g. through the optional aperture 314). The second surface 304 is therefore arranged to reflect light received from a first range of angles, and transmit light received from a second range of angles where the first range of angles and second range of angles do not overlap.

Light enters the second prism 206 through the fourth surface 308 and reflects off a fifth surface 310 which is arranged to reflect light back towards the fourth surface 308. The fourth surface 308 is further arranged to reflect light by total internal reflection towards the sixth surface 312. The fourth surface 308 is therefore arranged to reflect light received from a third range of angles, and transmit light received from a fourth range of angles where the third range of angles and fourth range of angles do not overlap. The sixth surface 312 is arranged to transmit light received from the fourth surface 308 towards the next optical element in the optical train. For example, the next optical element is the mirror 208 shown in Figure 2.

As total internal reflection is used to reflect the light incident upon the second surface 304 and fourth surface 308, this avoids the need for a coating to be applied to this surface and so reduces the complexity of the optical train. It also enables the same surface (and the same part of the surface) to both transmit and reflect light (including light of the same wavelength) which would not be possible if a simple reflective coating was instead applied to the surface.

Figure 3 also shows an optional aperture 314. The aperture 314 is positioned at the interface between the second surface 304 and a fourth surface 308. The aperture 314 is used to construct the size and shape of the exit pupil of the system at the position of the wearer's eye 214. The size and shape of the aperture 314 therefore directly correlates to the size and shape of the exit pupil provided to the eye 214 of the user. Integrating the aperture 314 into the prismatic relay optic 203, instead of placing it elsewhere in the optical train (e.g. between the prismatic relay optic 203 and the mirror 208) means the number of components included in the optical train is reduced whilst enabling the throughput of light through the optical train to be controlled. Including the aperture in this way also simplifies the overall assembly. There are many different ways in which the aperture 314 can be integrated into the prismatic relay optic 203 and various examples are described below.

The first and second prisms may be separated by an air gap to help facilitate total internal reflection and in such examples, the air gap is between the second surface 304 and fourth surface 308. The thickness of the air gap (i.e. the perpendicular distance between the second surface 304 and fourth surface 308) may be less than 1 mm or it may be within a range of 0.25 mm to 0.5 mm. The thickness of the air gap may also be related to the overall size of the device with a smaller device having a smaller air gap. The thickness of the air gap may, in some examples, be dictated by the width of an aperture positioned in between the first and second prisms.

The first and second prisms may comprise coupling and/or mounting features. The coupling features 316 (e.g. in the form of dowels on one prism and sockets on the other prism, or sockets on both prisms connected together using separate dowels) can be used to join the first and second prisms together such that their alignment and orientation relative to one another can remain constant during use and during assembly of the optical train, the prismatic relay optic 203 can be handled and positioned as a single optical element (comprising the two prisms which are fixed together). The mounting features 318 enable the prisms to be fixed into a mechanical housing located within the HMD.

Alternatively, by using injection moulding, the whole prismatic relay optic 203 assembly (including the first prism 204 and the second prism 206 spaced by an air gap between at least a part of the second surface 304 and fourth surface 308 and/or including the aperture 314) can be created as a single object in a single moulding cycle which significantly optimises how the optical system can be manufactured and integrated into an HMD assembly.

Although not shown in figure 3, the first and second prisms may be rotated with respect to one another at the interface between the second surface 304 and the fourth surface 308 such that the light rays in the second prism are not in the same plane as those in the first prism (e.g. such that the optical train is folded at this point). The ability to rotate the prisms allows additional degrees of freedom in the design, such that the optical elements can be rotated into different angular orientations for anthropometric and headwear fitment without having to include an additional mirror to fold the optical train.

Some or all of the optically powered surfaces of the first and second prisms may be further utilised to filter the light passed through the optical train. This is achieved by coating the surfaces with a filter configured to reject a predetermined range of wavelengths of light. For example, the surfaces which reflect light may be designed to only reflect light of a predetermined range of wavelengths and to absorb or transmit other wavelengths. A di-electric coating stack may be used as a coating to reflect light for a given angular incidence (or range of angles) at the surfaces configured to reflect light. Where these coatings are provided by a separate element that is in contact with the surface of the prism, an opaque glass may be used as the substrate for the coatings so as to absorb any light not reflected by the di-electric stack thereby reducing the amount of stray light within the optical train.

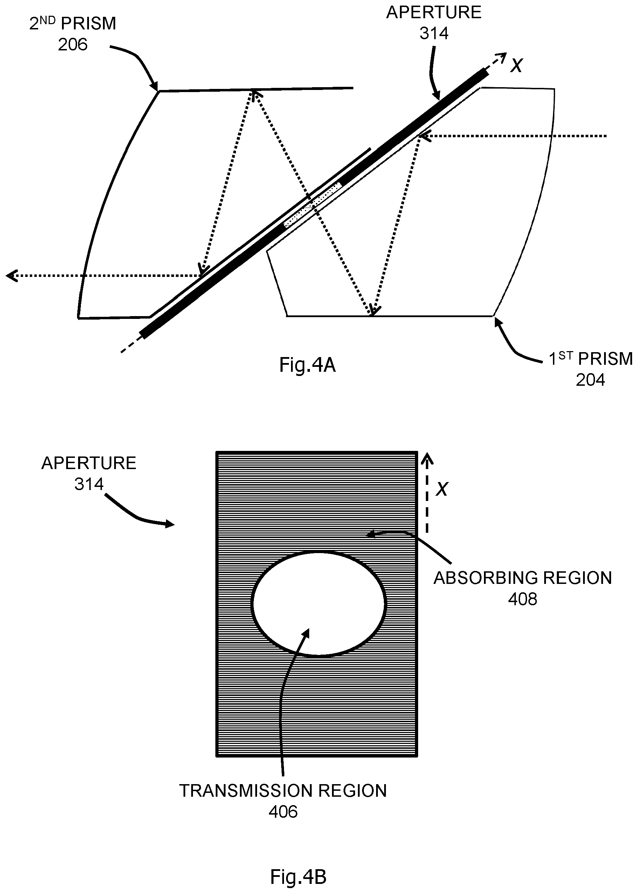

As described above an aperture 314 may be introduced into the prismatic relay optic 203 in numerous ways and various examples are shown in Figures 4A-F. In the first example shown in Figure 4A the aperture 314 is positioned in a gap (e.g. in the air gap between the second and fourth surfaces described above) between the first and second prisms. The aperture may, for example, be held in place using a mechanical mount located in a frame supporting the optical elements or the coupling elements 316 (described above and shown in Figure 3) may be used to hold both prisms and the aperture. Figure 4B shows a schematic view of the aperture 314 from Figure 4A, oriented along the axis X (as also marked in Figure 4A), which includes a transmission region 406 for the light to pass through and an absorbing region 408 for absorbing light. The size and shape of the transmission region can be used to define the size and shape of the exit pupil. The absorbing region 408 also prevents excess light from being reflected within the prisms, which might otherwise result in optical interference within the prisms and/or stray light within the HMD.

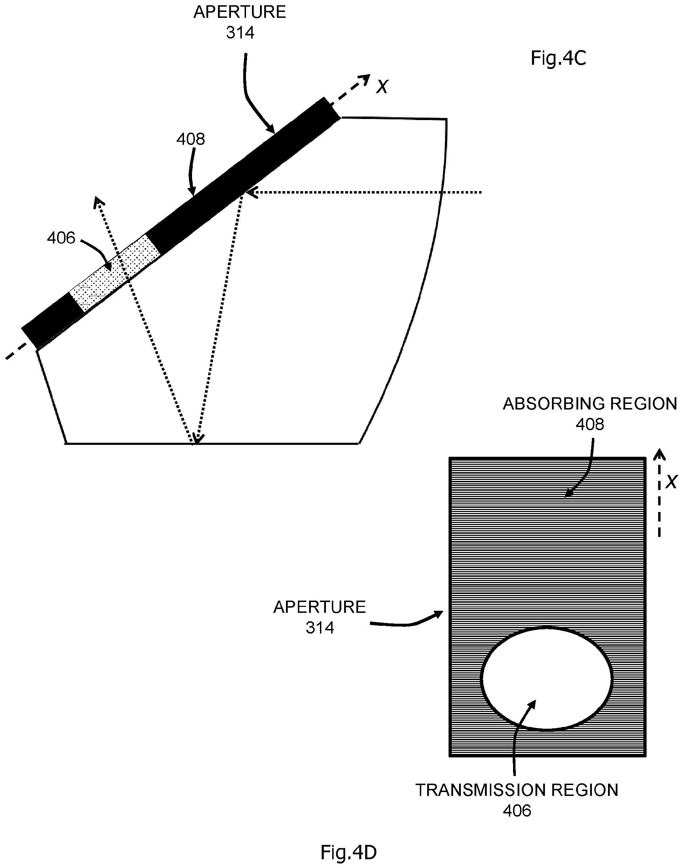

Figure 4C shows a second example of how the aperture 314 may be incorporated. In this embodiment, the aperture is screen printed onto the external side of a surface of either the first prism 204 or the second prism 206. Employing the same terminology used previously, the second surface 304 of the first prism 204 is screen printed or the fourth surface 308 of the second prism 206 is screen printed. Including the aperture in this manner simplifies the overall assembly because less components require mounting in the device. It additionally reduces the overall weight of the prismatic relay optic 203 (and hence the HMD itself) compared to having a separate aperture element. Figure 4D shows a view of the screen printed surface (oriented along the axis X as also marked in Figure 4C).

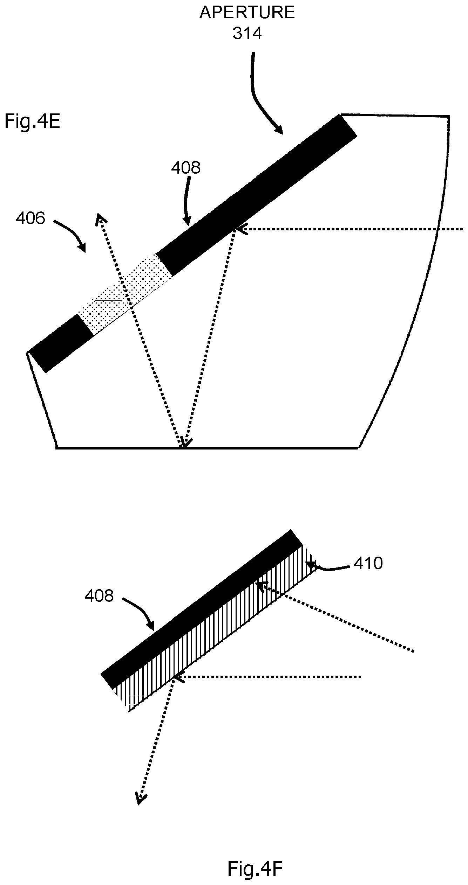

Figure 4E shows a third example of how the aperture 314 may be incorporated. In this example, instead of being screen printed onto the surface of one of the prisms, the aperture is moulded into the first prism 204 or the second prism 206. The aperture may be moulded into the internal side of the second surface 304 or the fourth surface 308. The moulding of the aperture into the prism may achieved using a surface structure to form the absorbing region or two part moulding with an opaque material may be used. Figure 4F shows a close up of the surface with the aperture moulded into it. The absorbing layer 408 is shown with an additional layer 410 which enables total internal reflection. Therefore, as indicated by the arrows symbolising the light path, light which is not reflected is absorbed by the absorbing region 408, whereas light incident on the surface at a different angle of incidence is reflected by total internal reflection with the additional layer 410. Although not shown in Figure 4F, where such an additional layer 410 is used, it is only present adjacent to the absorbing region 408 and is not present adjacent to the transmission region 406.

The examples shown in Figures 4C-4F, where the aperture is formed as part of one of the first and second prisms, can be manufactured through precision injection moulding. This can simplify manufacture, reduce manufacturing costs, and allow the prescription of the parts to be manufactured to high tolerance with complex surface forms (i.e., surfaces of the prisms with optical power). The prismatic relay optic 203 can therefore provide, in a single optical element, the ability to fold and shorten the light path, control the size and shape of the exit pupil and control stray light emitted by the light source. The numerous roles performed by a single prismatic relay optic 203 means less space is taken up within an HMD and bespoke prismatic relay optics for specific HMD devices can be easily manufactured and mass produced with techniques such as injection moulding. Finally, the position of the single prismatic optical relay 203 can be easily adjusted to account for any aberrations introduced by the mirror element 208 or combiner element 210. This removes or reduces the work intensive process of calibrating and repositioning multiple elements within the confined space available in HMDs.

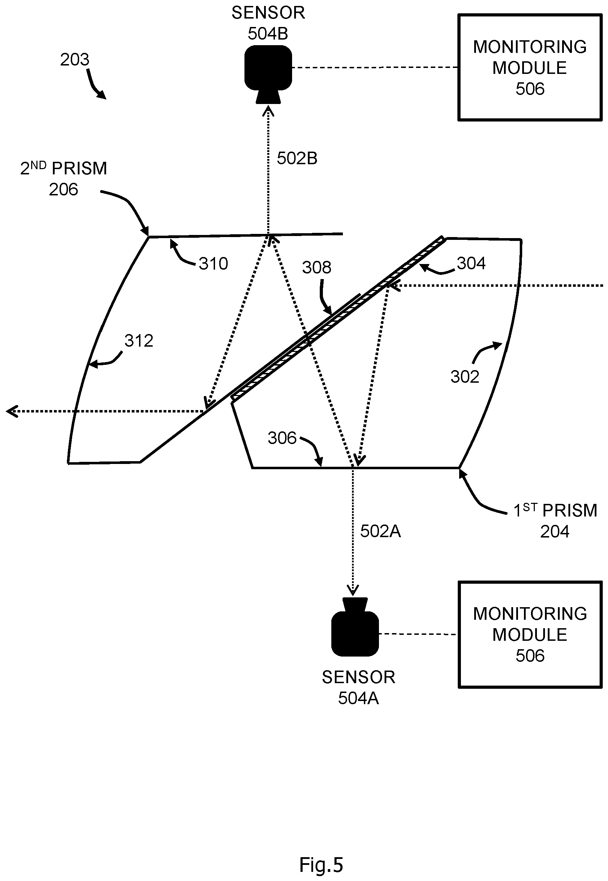

Where the prismatic relay optic 203 is used in the optical train 200 of an HMD, additional sensors may be included in the optical train to monitor its performance, as shown in Figure 5. As described above, the folding of the light path within the first and second prisms results in the path of the light travelling perpendicular, or at least substantially perpendicular, to a light path that would pass through a lens-based relay optic (e.g. relay optic 103 shown in Figure 1). By arranging the third surface 306 and/or the fifth surface 310 such that they do not reflect light at 100% efficiency (e.g. by angling the surfaces relative to the incident light and/or through the application of coatings to the surface), a portion of the light is transmitted through the surfaces and may be collected by sensors. Figure 5 shows the light transmitted through the second surface (arrow 502A) being collected by a first sensor 504A and light transmitted through the fifth surface (arrow 502B) being collected by a second sensor 504B. The sensors 504A, 504B may be positioned suitability close to the prismatic relay optic 203 to capture all of the light transmitted by the third and fifth surfaces to prevent light leakage in the optical train and/or they may be mounted on absorbing substrates (e.g. opaque glass or metal substrates) such that any light that is not captured by the sensor is absorbed by the substrate. The sensors are configured to transmit measurement data to a monitoring module 506 to process the data. The measurement data may include at least one of: wavelength/frequency characteristics, an intensity measurement, a direction of propagation from the surface of the prism, a polarisation measurement, an image of the light captured, or an image of certain portions of the field of view propagating through the prism

The sensors can be used to monitor the integrity and/or alignment of the projected image (as output by the display source 202). It enables monitoring of characteristics of the projected image after it has been converted from electrical signals (e.g. that control the pixels of the display source 202) to photons and before it reaches the wearer's eye, specifically the display image can be monitored and cross-checked against a reference to ensure the image is correct and is being drawn or presented as intended without any interference or incorrect content. For example, the sensors may include a lens to focus the light onto the sensing elements in order that image frames can be captured as a whole and cross-checked against a reference frame, e.g. by checking specific features or patterns in the corners or borders of the display. These specific features or patterns may be added to the projected image (as output by the display source) for the specific purpose of checking the alignment or quality of the display image. Depending upon the environment in which the HMD is used, the positioning of the projected image may be safety critical as offsets in positioning may, for example, result in elements within the real world (as viewed through the combiner 210) being incorrectly or inaccurately labelled.

The monitoring module 506 can be implemented in numerous ways. In one example, the monitoring module is incorporated into the HMD and connected to the sensors. In another example, the monitoring module may be detachably connected to the HMD (i.e., plugged into the HMD). In another example, the monitoring module may separate to the HMD and wirelessly communicate with the sensors. The HMD may then automatically perform its own calibration of optical elements in the optical train to correct for issues detected by the sensors Alternatively, the HMD may provide feedback to the source of the digital images output by the display source so that any identified offset can be corrected or the display disabled entirely (e.g. where the identified offset exceeds pre-defined threshold or otherwise satisfies pre-defined conditions).

Whilst Figure 5 shows two sensors and two monitoring modules, it will be appreciated that there may be a different number of sensors (e.g. only one sensor), along with additional optical elements such as small lenses and/or monitoring modules and any monitoring module may receive sensor data from one or more sensors.

Whilst Figure 5 shows the sensors being positioned adjacent to the prismatic relay optic 203, in addition, or instead a sensor may be placed behind the mirror 208 in the arrangement shown in Figure 2. In such an example, the mirror may be modified (e.g. by changing a coating on the mirror) such that a fraction of light is not reflected but instead passes through the mirror and is incident upon the sensor.

Whilst the optical train described above refers to placing an aperture 314 between the two prisms in the prismatic relay optic 203, it will be appreciated that other optical elements such as an absorbing element and/or filter may be placed between the two prisms in addition to, or instead of, the aperture 314.

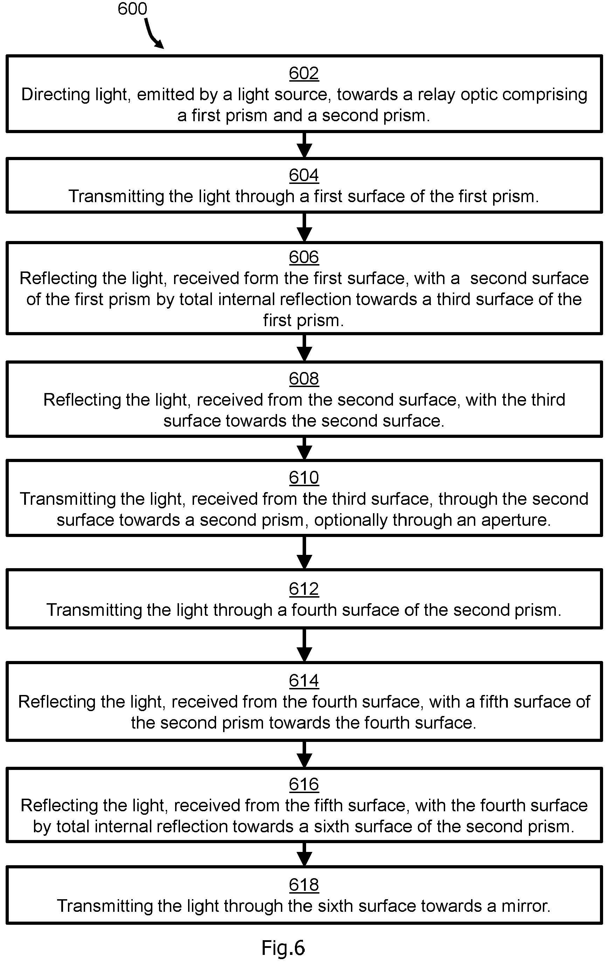

Figure 6 shows a flow diagram 600 describing the operation of the optical train as shown in Figure 2 and described herein. Light is emitted from the display source 202 and directed towards the prismatic relay optic 203 (block 602). The light is transmitted through the first surface 302 of the first prism 204 (block 604). The light that enters the first prism 204 through the first surface 302 is then reflected by the second surface 304 of the first prism 204 (by total internal reflection) towards a third surface 306 of the first prism 204 (block 606). The light that is incident on the third surface 306 is then reflected back towards the second surface 304 (block 608). The second surface 304 then transmits the light, received from the third surface 306, towards the second prism 206 and optionally passes through an aperture 314 (block 610). As described above, where the light passes through an aperture (in block 610) this assists in forming the exit pupil of the optical train.

Having left the first prism 204, the light is transmitted through the fourth surface 308 into the second prism 206 (block 612) before being reflected by the fifth surface 310 of the second prism 206 back towards the fourth surface (block 614). The light, received from the fifth surface 310, is then reflected by the fourth surface 308 (by total internal reflection) towards the sixth surface 312 of the second prism 206 (block 616). The light is transmitted through the sixth surface 312 towards the mirror 208 (block 618).

As described above, as well as folding the light (as described in Figure 6), the light is focussed as it passes through the prismatic relay optic 203 so that it forms an intermediate focus close to the front face of the mirror 208. This focussing may be performed in multiple stages depending upon which of the six surfaces 302-312 have optical power, e.g. it may be performed each time the light is incident upon a surface having optical power.

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

## Claims

1. An optical train (200) integrated into a head mounted display, the optical train comprising a display source (202), a prismatic relay optic (203), a mirror (208) and a combiner (210), wherein:
the prismatic relay optic (203) is arranged to receive light emitted by the display source and form a focal plane proximate to the mirror (208);
the prismatic relay optic (203) comprises a first prism (204) and a second prism (206) wherein light emitted from the display source (202) enters the first prism (204) via a first surface (302), is reflected off a second surface (304) and a third surface (306) before passing through the second surface (304) into the second prism (206) through a fourth surface (308), and light entering the second prism (206) through the fourth surface (308) is reflected off a fifth surface (310) and the fourth surface (308) before exiting the second prism (206) through a sixth surface (312);
the mirror (208) is arranged to reflect light output from the prismatic relay optic (203) towards the combiner (210); and
the combiner is arranged to reflect the light incident upon it from the mirror toward a wearer of the head mounted display to allow the wearer to view the output from the display source and a real world environment simultaneously.

2. The optical train according to claim 1, wherein the prismatic relay optic (203) further comprises an aperture (314) positioned between the first prism (204) and the second prism (206), and wherein a size and shape of the aperture correlates to a size and shape of an exit pupil of the optical train.

3. The optical train according to claim 2, wherein the aperture (314) is inserted between the second surface (304) and the fourth surface (308).

4. The optical train according to claim 2, wherein the aperture (314) is screen printed onto an external side of the second surface (304) of the first prism or onto an external side of the fourth surface (308) of the second prism.

5. The optical train according to claim 2, wherein the aperture (314) is moulded into an internal side of the second surface (304) of the first prism or into an internal side of the fourth surface (308) of the second prism.

6. The optical train according to any of the preceding claims, wherein the prismatic relay optic (203) further comprises an air gap between the second surface (304) and the fourth surface (308).

7. The optical train according to claim 6, wherein a thickness of the air gap is less than 1 mm.

8. The optical training according to any of the preceding claims, wherein the two prisms (204, 206) of the prismatic relay optic (203) are integrally formed.

9. The optical training according to any of claims 1-7, wherein the two prisms (204, 206) of the prismatic relay optic (203) comprise coupling elements (316) for connecting the prisms together.

10. The optical train according to any of the preceding claims, wherein the prismatic relay optic (203) is arranged off-axis with respect to the chief optical ray of a light path through the optical train.

11. The optical train according to any of the preceding claims, wherein the first prism and the second prism are rotated with respect to another at the interface between the second surface (304) and the fourth surface (308).

12. The optical train according to any of the preceding claims, further comprising:
a first light sensor (504A) configured to collect measurement data by detecting light transmitted through the third surface (306); and/or
a second light sensor (504B) configured to collect measurement data by detecting light transmitted through the fifth surface (310).

13. The optical train according to claim 13, wherein the first and second light sensors are configured to transmit measurement data to a monitoring module (506).

14. A head mounted display comprising the optical train according to any of the preceding claims.

15. The head mounted display according to claim 14, further comprising the monitoring module (506) and wherein the monitoring module is configured to detect a position of an image output by the display source (202) relative to the optical train.
